# EUROPÄISCHE PATENTSCHRIFT

(11) **EP 3 666 364 B1**
(45) Veröffentlichungstag und Bekanntmachung des Hinweises auf die Patenterteilung: **01.11.2023**
(21) Anmeldenummer: 18020637.7
(22) Anmeldetag: 14.12.2018
(51) Int. Cl.: B01D 53/14, B01D 53/18, C10K 1/00

(54) **VERFAHREN UND VORRICHTUNG ZUR REGENERIERUNG EINES BELADENEN WASCHMITTELS AUS EINER GASWÄSCHE**
METHOD AND DEVICE FOR REGENERATION OF A LOADED SCRUBBING AGENT FROM A GAS SCRUBBING INSTALLATION
PROCÉDÉ ET DISPOSITIF DE RÉGÉNÉRATION DU DÉTERGENT CHARGÉ À PARTIR D'UN LAVAGE À GAZ

(43) Veröffentlichungstag der Anmeldung: 17.06.2020
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60486 Frankfurt (DE); Gubrinski, Alfred, 64390 Erzhausen (DE); Frey, Christian, 69181 Leimen (DE); Rappold, Dorit, 60437 Frankfurt (DE); Corbet, Sharon, 60438 Frankfurt (DE)
(74) Vertreter: Stang, Stefan

(56) Entgegenhaltungen:
- WO-A1-2015/041914
- WO-A1-2017/088981
- CN-A- 107 261 769
- DE-A1-102005 059 101
- US-A- 4 332 596

## Beschreibung

### Gebiet der Erfindung

Die Erfindung betrifft ein Verfahren zur Regenerierung eines beladenen Waschmittels aus einer Gaswäsche zur Reinigung von Rohsynthesegas. Die Erfindung betrifft ferner eine Vorrichtung zur Regenerierung eines beladenen Waschmittels aus einer Gaswäsche zur Reinigung von Rohsynthesegas.

### Stand der Technik

Verfahren zur Abtrennung von unerwünschten Begleitstoffen aus technischen Rohsynthesegasen mittels physikalischer oder chemischer Absorption sind aus dem Stand der Technik bekannt. So können mit solchen Verfahren unerwünschte Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber beispielsweise auch Carbonylsulfid (COS) und Cyanwasserstoff (HCN), von den erwünschten Synthesegasbestandteilen wie Wasserstoff (H₂) und Kohlenmonoxid (CO) bis in den Spurenbereich entfernt werden.

In diesen auch als Gaswäschen bezeichneten Verfahren werden die Eigenschaften von Flüssigkeiten ausgenutzt, gasförmige Stoffe zu absorbieren und physikalisch oder chemisch gebunden in Lösung zu halten.

Wie gut ein Gas von einer Flüssigkeit absorbiert wird, wird beispielsweise durch den Absorptionskoeffizienten - auch als Löslichkeitskoeffizient bezeichnet - ausgedrückt. Je besser das Gas in der Flüssigkeit absorbiert oder gelöst wird, desto größer ist der Absorptionskoeffizient. Der Absorptionskoeffizient steigt bei physikalisch wirkenden Gaswäschen im Allgemeinen mit sinkender Temperatur und, nach dem Gesetz von Henry, mit steigendem Druck. Im Falle chemischer Gaswäschen steigt die Menge der entfernbaren Gasbestandteile mit der Menge des eingesetzten chemisch wirkenden Absorptionsmittels, welches die entfernbaren Gasbestandteile mehr oder weniger selektiv bindet. Die in Gaswäschen eingesetzten Flüssigkeiten werden allgemein auch als Waschmittel bezeichnet.

Bei der Gaswäsche aus dem Rohsynthesegas ausgewaschene Komponenten werden im Anschluss an die Gaswäsche aus dem beladenen Waschmittel entfernt, wodurch ein regeneriertes oder zumindest teilregeneriertes Waschmittel erhalten wird.

Bekannte Verfahren zur Regenerierung des Waschmittels sind im Falle physikalisch wirkender Gaswäschen Druckentspannung (Flashen), Druckentspannung mit Stripp-Gas (Strippen) sowie Druckentspannung mit Stripp-Gas, bei der der Eigendampf des Waschmittels als Stripp-Gas verwendet wird (Heißregenerierung). Um für eine erneute Absorption von Gaskomponenten aus dem Rohsynthesegas verwendet werden zu können, wird ein physikalisch wirkendes Waschmittel in der letzten Regenerationsstufe üblicherweise einer Heißregenerierung unterzogen. Durch die Heißregenerierung wird ein nahezu reines Waschmittel zurückgewonnen, welches sich für die erneute Absorption von unerwünschten Gasbestandteilen aus dem Rohsynthesegas eignet.

Im Falle chemisch wirkender Gaswäschen kann das Waschmittel beispielsweise durch Aufkochen bei reduziertem Druck regeneriert werden.

Ein bekanntes und häufig angewendetes physikalisch wirkendes Gaswäscheverfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der unerwünschten Gasbestandteile des Rohsynthesegases durch tiefkaltes, das heißt signifikant unter Umgebungstemperatur abgekühltes Methanol als Waschmittel. Die Methanol-Wäsche nutzt die Tatsache aus, dass sich die Löslichkeitskoeffizienten von H₂S, COS und CO₂ in flüssigem Methanol um mehrere Größenordnungen unterscheiden, erwünschte Bestandteile wie H₂ und CO jedoch nur unwesentlich physikalisch durch Methanol gebunden werden. In der Praxis findet bei einer Methanol-Wäsche in einer Absorptionsvorrichtung (Absorptionskolonne) ein intensiver Stoffaustausch zwischen dem Rohsynthesegas und dem Waschmittel statt. Dabei erhöht sich die Löslichkeit der unerwünschten Gasbestandteile mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität aufzuweisen, womit es auch bei sehr niedrigen Temperaturen großtechnisch verwendbar ist.

Das bei einer Gaswäsche im letzten Schritt einer Regenerationsstufe, beispielsweise einer Heißregenerierung, erhaltene regenerierte Waschmittel muss anschließend auf einen für die Absorption geeigneten hohen Druck verdichtet werden.

Beispielsweise weist das im Rectisol-Verfahren durch Heißregenerierung erhaltene Methanol einen Druck von etwa 2 bar auf, muss jedoch anschließend durch eine Pumpe auf den für die Absorption erforderlichen Druck von 20 bis 60 bar verdichtet werden. Gleichzeitig ist das regenerierte Methanol auf die für die Absorption erforderliche niedrige Temperatur von -20 °C bis -70 °C zu kühlen. Die Kühlung erfolgt durch ein Kühlsystem mit einer Gruppe von 6 bis 12 Wärmeaustauschern, in welchen die Wärme des regenerierten Methanols auf kaltes, beladenes Methanol übertragen wird. Das kalte, beladene Methanol stammt beispielsweise aus einer Flash-Stufe der gleichen Gaswäscheanlage.

Da die für die Verdichtung des regenerierten Waschmittels erforderliche Pumpe vor (upstream) der Gruppe von Wärmeaustauschern angeordnet ist, müssen die Wärmeaustauscher in nachteiliger Weise für entsprechend hohe (bei der Absorption verwendete) Drücke ausgelegt werden.

Um den vorgenannten Nachteil zumindest teilweise zu vermeiden kann das regenerierte Waschmittel auch von einer ersten Pumpe auf einen mittleren Druck von beispielsweise 5 bis 10 bar vorverdichtet werden. Die nachgelagert (downstream) angeordnete Gruppe von Wärmeaustauschern muss dementsprechend nur für diese Drücke ausgelegt werden. Den Wärmeaustauschern nachgelagert (downstream) wird das kalte Waschmittel durch eine Pumpe auf den für die Absorption erforderlichen Druck weiter verdichtet.

Jedoch weist auch diese Verfahrensführung einige Nachteile auf. Die für die Heißregenerierung verwendete Stripp-Kolonne weist üblicherweise einen Flüssigkeitsstand an regeneriertem Waschmittel auf einem Kaminboden auf, welcher auch als Sumpf der Stripp-Kolonne bezeichnet werden kann. Die Flüssigkeitsmenge in diesem Sumpf kann nicht geregelt werden, da alle weiteren Parameter geregelt werden, jedoch zumindest ein Freiheitsgrad erhalten bleiben muss. Dies führt durch das stark begrenzte Volumen im Sumpf der Stripp-Kolonne zu einer verminderten Flexibilität im Betrieb der Anlage bei Schwankungen in der Beladung. Entsprechend ist der Sumpf der Stripp-Kolonne entsprechend groß auszulegen, um auf diese Weise beispielsweise während eines geplanten oder ungeplanten Stillstands der Anlage eine bestimmte Menge an Waschmittel zwischenlagern zu können. Dies resultiert in einer größeren Auslegung der Stripp-Kolonne als eigentlich erforderlich und wünschenswert.

Ferner muss die für die Vorverdichtung verwendete Pumpe für kavitationsfreien Betrieb einen hohen NPSHR Wert (Net Positive Suction Head Required = erforderliche positive Netto-Saughöhe) aufweisen und ist für hohe Temperaturen auszulegen, da sich das zu fördernde Waschmittel nahe dem Siedepunkt befindet. Schließlich wird zusätzliches Equipment zum Betrieb der zweiten Pumpe benötigt, und so der Verbrauch an elektrischer Leistung durch den Betrieb der zwei Pumpen und weiteren dafür erforderlichen Equipments erhöht.

Weitere aus dem Stand der Technik bekannte Verfahrensführungen nutzen einen dedizierten Waschmittel-Vorratsbehälter, welcher zur Speicherung überschüssigen Waschmittels bei Wechsel auf kleinere Gasbeladungen genutzt wird. Ein solcher Vorratsbehälter benötigt zumindest eine Pumpe, Instrumentierung, Sicherheitsequipment, eine Überlagerung mit Schutzgas (tank blanketing) und eine Absperrvorrichtung zur eigentlichen Gaswäsche-Anlage.

DE 10 2013 022 083 offenbart ein Gaswäsche-Verfahren, bei dem im Falle eines ungeplanten Abschaltens der Gaswäsche-Anlage oder beim Abschalten nur eines Teils der Gaswäsche-Anlage mit Gasbestandteilen beladenes Waschmittel aus dem Waschmittelkreislauf entnommen und in einen als Druckbehälter ausgelegten Entgasungsbehälter überführt wird. Aus dem Entgasungsbehälter wird ein im Wesentlichen unbeladenes Waschmittel abgezogen und in einen Speicherbehälter überführt. Nachteilig daran ist, dass im Entgasungsbehälter aus dem beladenen Waschmittel ausgasende, teilweise toxische Gasbestandteile (H₂S, HCN) abgezogen und einer Fackel zur kontrollierten Verbrennung zugeführt werden müssen.

US 4 332 596 offenbart ein Verfahren zum selektiven Austauschen von Schwefelwasserstoff und Kohlenoxidsulfid aus feuchten Gasgemischen bei Temperaturen unter 0 °C mit aromatischen Absorptionsmitteln wie Toluol und Xylol, die 2 bis 30 Gew.-% Methanol enthalten.

CN 107 261 769 A offenbart ein Steuerungssystem und ein Verfahren für ein Natriumcitrat-Desulfurierungsverfahren. Dabei wird Schwefeldioxid durch eine wässrige Natriumcitratlösung in einem reversiblen Prozess chemisch gebunden und anschließend wieder desorbiert.

WO 2017/088981 A1 offenbart ein Verfahren und eine Vorrichtung zur Herstellung und Verwendung eines weitgehend aus Wasserstoff und Kohlenmonoxid bestehenden Synthesegases, wobei ein kohlenwasserstoffhaltiges Ausgangsmaterial in ein schwefelfreies Rohsynthesegas umgewandelt wird. Dabei wird mit Hilfe einer Gaswäsche Kohlendioxid aus dem Ausgangsmaterial entfernt, um ein kohlendioxidhaltiges Waschmittel zu erzeugen. Das Kohlendioxid wird aus dem beladenen Waschmittel lediglich durch Druckreduzierung und anschließende thermische Desorption entfernt.

WO 2015/041914 A1 offenbart ein Verfahren zur Regenerierung von Absorptionsmitteln, welche zur Entfernung von Verunreinigungen aus einem Fluidstrom verwendet werden. Das Verfahren umfasst ein Absorptionsmittelregenerierungssystem, welches eine Strippkolonne, einen Aufkocher, einen Kondensator und einen Rückflussempfänger umfasst. Das Verfahren zeichnet sich durch die spezifische Anordnung der Rückführung des kondensierten Strippgases zum Rückflussempfänger aus.

DE 10 2005 059101 A1 offenbart ein Verfahren zur selektiven Entfernung von schwefelhaltigen Komponenten aus Kohlenwasserstoffe enthaltenden, periodisch und in schwankenden Mengen und/oder mit schwankenden Konzentrationen an schwefelhaltigen Komponenten anfallenden Gasen. Dabei werden die schwefelhaltigen Komponenten mittels eines Waschmittels absorbiert, das mit den schwefelhaltigen Komponenten beladene Waschmittel anschließend regeneriert, die bei der Regeneration abgetrennten schwefelhaltigen Komponenten zu Schwefel umgesetzt und das regenerierte Waschmittel in die Absorption zurückgeführt. Um einen bezüglich Zeit, Menge und/oder Konzentration der schwefelhaltigen Komponenten vergleichmäßigten Zufluss des mit schwefelhaltigen Komponenten beladenen Waschmittels zur Regeneration zu erreichen, ist eine Zwischenspeicherung des beladenen Waschmittels nach der Absorption vorgesehen.

### Beschreibung der Erfindung

Die Aufgabe der vorliegenden Erfindung besteht somit darin, die vorgenannten Nachteile des Standes der Technik zumindest teilweise zu überwinden.

Eine Aufgabe der vorliegenden Erfindung besteht darin, ein Verfahren anzugeben, welches den Einsatz von bei hohen Drücken zu betreibenden Wärmeaustauschern zumindest teilweise vermeidet.

Eine weitere Aufgabe der vorliegenden Erfindung besteht darin, ein Verfahren anzugeben, welches einen flexibleren Betrieb der Vorrichtung für die Heißregenerierung ermöglicht, insbesondere im Hinblick auf mögliche Anpassungen bei Schwankungen in der Beladung der Vorrichtung.

Eine weitere Aufgabe der vorliegenden Erfindung besteht darin, ein Verfahren anzugeben, welches eine kleinere Auslegung der Vorrichtung für die Heißregenerierung ermöglicht, wodurch Material eingespart wird und Investitionsausgaben verringert werden.

Eine weitere Aufgabe der vorliegenden Erfindung besteht darin, ein Verfahren anzugeben, welches die Zwischenlagerung von regeneriertem Waschmittel bei Stillständen der Gaswäscheanlage ermöglicht.

Eine weitere Aufgabe der vorliegenden Erfindung besteht darin, ein Verfahren anzugeben, welches die Zwischenlagerung von regeneriertem Waschmittel, frei von toxischen Gas-Bestandteilen, bei einer nicht geplanten Abschaltung der Gaswäscheanlage ermöglicht, wobei die Verbrennung toxischer Gas-Bestanteile in einer Fackel zumindest teilweise zu vermeiden ist.

Eine weitere Aufgabe der vorliegenden Erfindung besteht darin, ein Verfahren anzugeben, welches beim Wechsel auf kleinere Gasbeladungen keinen dedizierten Waschmittel-Vorratsbehälter zur Zwischenlagerung von überschüssigem Waschmittel benötigt.

Eine weitere Aufgabe der vorliegenden Erfindung besteht darin, ein Verfahren anzugeben, welches die Regelung der im Sumpf der Regenerationsstufe befindlichen Waschmittelmenge ermöglicht, wodurch einfacher auf Schwankungen bei der Beladung mit Rohsynthesegas reagiert werden kann.

Eine weitere Aufgabe der vorliegenden Erfindung besteht darin, ein Verfahren anzugeben, welches den Verbrauch an elektrischer Leistung im Hinblick auf die Regenerierung des Waschmittels verringert, wodurch Betriebskosten eingespart werden.

Eine weitere Aufgabe der vorliegenden Erfindung besteht darin, eine Vorrichtung oder eine Anlage anzugeben, die zumindest eine der vorgenannten Aufgaben wenigstens teilweise löst.

Die Aufgaben der Erfindung werden zumindest teilweise gelöst durch ein Verfahren zur Regenerierung eines beladenen Waschmittels aus einer Gaswäsche zur Reinigung von Rohsynthesegas, wobei das Rohsynthesegas zumindest Kohlenmonoxid (CO), Wasserstoff (H₂), Kohlendioxid (CO₂) und Schwefelwasserstoff (H₂S) aufweist, bei dem das beladene Waschmittel in einer Regenerationsstufe von gebundenen Gasbestandteilen zumindest teilweise befreit wird, wobei ein regeneriertes Waschmittel erhalten wird, wobei das beladene Waschmittel in der Regenerationsstufe durch Strippen mit Waschmitteldampf regeneriert wird, und wobei es sich bei der Gaswäsche um eine physikalisch wirkende Gaswäsche handelt, und das Waschmittel Methanol als Hauptbestandteil aufweist, wobei der Anteil an Methanol im Waschmittel mindestens 75 Gew.-% umfasst, wobei das regenerierte Waschmittel nach Abziehen aus der Regenerationsstufe einem Zwischenbehälter zugeführt wird, und das regenerierte Waschmittel aus dem Zwischenbehälter abgezogen und einer Absorptionsvorrichtung zur Reinigung von Rohsynthesegas zugeführt wird, und beladenes Waschmittel aus der Absorptionsvorrichtung abgezogen und anschließend einer Druckentspannungsstufe zugeführt wird, wobei beladenes Waschmittel mit verminderter Konzentration an gebundenen Gasbestandteilen erhalten wird, das aus der Druckentspannungsstufe abgezogen und der Regenerationsstufe zugeführt wird, und aus der Druckentspannungsstufe abgezogenes Waschmittel vor Zuführung zur Regenerationsstufe einem Reabsorber zugeführt wird, wobei im Reabsorber CO₂ durch ein Inertgas aus dem beladenen Waschmittel ausgestrippt wird, und im Reabsorber unbeabsichtigt mitausgestripptes H₂S durch dem Reabsorber zugeführtes, aus der Druckentspannungsstufe abgezogenes beladenes Methanol reabsorbiert wird.

Erfindungsgemäß wird das aus der Regenerationsstufe abgezogene Waschmittel zunächst einem Zwischenbehälter zugeführt, bevor es anschließend aus dem Zwischenbehälter abgezogen und der Absorptionsvorrichtung zur erneuten Absorption von unerwünschten Gasbestandteilen aus Rohsynthesegas zugeführt wird. Durch die Einführung eines Zwischenbehälters in das Verfahren kann der Betrieb der Regenerationsstufe, beispielsweise der Betrieb einer Stripp-Kolonne, flexibler gestaltet werden. Schwankungen bei der Beladung der Gaswäschevorrichtung mit Rohsynthesegas können einfacher ausgeglichen werden. Durch die Einführung des Zwischenbehälters in das Verfahren ist eine Regelung der Füllhöhe des Sumpfes der Regenerationsstufe erstmals möglich. Der Sumpf dient somit nicht mehr als Puffervolumen bei ungeplanten oder geplanten Stillständen der Gaswäscheanlage. Demnach kann der Sumpf kleiner gestaltet werden als bisher erforderlich, wodurch zum Aufbau einer Gaswäscheanlage anfallende Investitionsausgaben verringert werden. In den Zwischenbehälter wird ein regeneriertes Waschmittel überführt, welches bei geplanten oder ungeplanten Stillständen der Anlage unmittelbar im Zwischenbehälter auch für längere Zeit aufbewahrt werden kann, da es keine toxischen oder umweltschädlichen Gasbestandteile enthält. Da das regenerierte Waschmittel die Regenerationsstufe bei Umgebungsdruck oder einem Druck nur leicht oberhalb des Umgebungsdrucks (beispielsweise 2 bar) verlässt, muss der Zwischenbehälter nicht als Druckbehälter ausgelegt werden. Ein einen Druckbehälter umfassendes Verfahren, aus dem nach Druckentspannung ausgasende Bestandteile aufgrund ihrer Toxizität und potentiellen Umweltschädlichkeit zur Fackel geschickt werden müssen, erübrigt sich somit. Das erfindungsgemäße Verfahren erfordert nur eine Pumpe, wodurch Investitionskosten für eine zweite Pumpe sowie Betriebskosten bezüglich des Verbrauchs von Elektrizität eingespart werden. Ferner ermöglicht das erfindungsgemäße Verfahren das regenerierte Waschmittel durch den Zwischenbehälter in größeren Mengen vorzukühlen. Die für die Verdichtung nachgeschalteten Pumpen können dadurch kleiner ausgelegt werden.

Bei der "Gaswäsche" handelt es sich um eine Gaswäsche auf Basis physikalischer Absorption in einem physikalisch wirkenden Waschmittel.

In Zusammenhang mit Gegenständen der Erfindung wird unter einem "beladenen Waschmittel" ein Waschmittel verstanden, in dem Gasbestandteile physikalisch absorbiert vorliegen. Die Beladung des Waschmittels ist dabei als reversibler Vorgang zu verstehen ist, das heißt durch Regenerierung des Waschmittels können Gasbestandteile zumindest teilweise wieder aus dem Waschmittel desorbiert werden. Die "Regenerierung" kann, muss aber nicht vollständig ablaufen, so dass ein teilweise oder vollständig regeneriertes Waschmittel durch Regenerierung erhalten wird.

In Zusammenhang mit Gegenständen der Erfindung wird unter einem "Rohsynthesegas" ein Produktgasgemisch aus einer chemischen Reaktion eines kohlenstoffhaltigen Einsatzstoffes verstanden, welches als Produkte zumindest Kohlenmonoxid (CO) sowie Wasserstoff (H₂) als erwünschte Bestandteile sowie unerwünschte Bestandteile enthält, welche durch eine Gaswäsche entfernbar sind.

In Zusammenhang mit Gegenständen der Erfindung wird unter einer "Regenerationsstufe" ein Verfahrensschritt verstanden, welcher unter Verwendung einer Regenerationsvorrichtung eine zumindest teilweise Regenerierung des beladenen Waschmittels bewirkt. Dabei wird das beladene Waschmittel zumindest teilweise von gebundenen Gasbestandteilen befreit. Bei der Regenerationsstufe handelt es sich um eine Stufe, die einen Heißregenerierschritt umfasst. In einem Heißregenerierschritt wird das beladene Waschmittel weitgehend oder vollständig regeneriert, so dass es eine Reinheit von wenigstens 99 Gew.-% aufweist, vorzugsweise eine Reinheit von wenigstens 99,5 Gew.-%, weiter bevorzugt eine Reinheit von wenigstens 99,9 Gew.-%.

Das regenerierte Waschmittel wird nach Abziehen aus der Regenerationsstufe einem Zwischenbehälter zugeführt. Das regenerierte Waschmittel wird dem Zwischenbehälter nach dem Abziehen aus der Regenerationsstufe unmittelbar oder mittelbar zugeführt. In letzterem Fall wird das regenerierte Waschmittel weiteren Verfahrensschritten unterzogen, bevor es dem Zwischenbehälter zugeführt wird.

In Zusammenhang mit Gegenständen der Erfindung wird unter einem "Zwischenbehälter" ein Behälter verstanden, der sich grundsätzlich für die Aufbewahrung und/oder Lagerung von regeneriertem Waschmittel eignet. Der Zwischenbehälter ist im Kontext der Konfiguration einer Gaswäscheanlage zwischen zwei weiteren Komponenten der Gaswäscheanlage angeordnet. Insbesondere ist der Zwischenbehälter durch Fluidverbindungen mit zwei weiteren Komponenten der Gaswäscheanlage verbunden, wodurch der Zwischenbehälter über die Fluidverbindungen zwischen diesen Komponenten angeordnet ist.

Das regenerierte Waschmittel wird aus dem Zwischenbehälter abgezogen und einer Absorptionsvorrichtung zur Reinigung von Rohsynthesegas zugeführt. Das regenerierte Waschmittel wird der Absorptionsvorrichtung nach Abziehen aus dem Zwischenbehälter unmittelbar oder mittelbar zugeführt. In letzterem Fall wird das regenerierte Waschmittel weiteren Verfahrensschritten unterzogen, bevor es der Absorptionsvorrichtung zugeführt wird.

Bei der Gaswäsche handelt es sich um eine physikalisch wirkende Gaswäsche. Die oben genannten Vorteile des erfindungsgemäßen Verfahrens kommen insbesondere bei physikalisch wirkenden Gaswäschen zum Tragen, da das Waschmittel bei dieser Art von Gaswäschen zur Ausnutzung der Druckabhängigkeit des Absorptionskoeffizienten in der Absorptionsvorrichtung unter hohem Druck steht.

In physikalisch wirkenden Gaswäschen wird die Löslichkeit der zu entfernenden Gasbestandteile im Waschmittel durch physikalische Wechselwirkungen bewirkt. Beispiele für in industriellen Gaswäscheverfahren eingesetzte physikalisch wirkende Waschmitteln sind Methanol, N-Methyl-2-pyrrolidion (NMP), Polyethylenglykol dimethylether (DMPEG), n-Oligoethylenglycol-methyl-isopropylether (MPE) und N-Methylcaprolactam (NMC).

Das Waschmittel weist Methanol als Hauptbestandteil auf, wobei das Waschmittel vorzugsweise aus Methanol besteht. Der Begriff "Waschmittel" bezieht sich in diesem Zusammenhang auf das nicht mit Gasbestandteilen beladene Waschmittel. Unter "Hauptbestandteil" ist in diesem Zusammenhang zu verstehen, dass der Anteil an Methanol im Waschmittel mindestens 50 Gew.-% aufweist, erfindungsgemäß mindestens 75 Gew.-% aufweist, oder mindestens 90 Gew.-%, oder mindestens 95 Gew.-%, oder mindestens 99 Gew.-%. Vorzugsweise besteht das Waschmittel aus Methanol, das heißt reinem Methanol mit einer Reinheit von wenigstens 99,5 Gew.-% oder höher. Die oben genannten Vorteile des erfindungsgemäßen Verfahrens kommen insbesondere bei Methanol als physikalisch wirkendem Waschmittel zum Tragen, da Methanol zur Verwendung in der Absorptionsvorrichtung auf sehr niedrige Temperaturen, in der Regel -20 °C bis -70 °C, abgekühlt wird, um die Temperaturabhängigkeit des Absorptionskoeffizienten sowie die bei niedrigen Temperaturen bezüglich der zu entfernenden Gaskomponenten höhere Selektivität von Methanol optimal auszunutzen.

In chemisch wirkenden Gaswäschen, wird die Absorption der zu entfernenden Gasbestandteile im Waschmittel durch chemische Wechselwirkungen, insbesondere chemische Bindungen, bewirkt. Ein Beispiel für eine solche chemische Wechselwirkung ist eine Säure-Base-Wechselwirkung. Ein Beispiel für eine Säure-Base-Wechselwirkung ist die Bindung eines sauren Gases, beispielsweise von Schwefelwasserstoff (H₂S), durch ein Amin, beispielsweise ein primäres, sekundäres und/oder tertiäres Amin oder einen entsprechenden Aminoalkohol. Beispiele für geeignete Amine oder Aminoalkohole sind Monoethanolamin (MEA), Diethanolamin (DEA), Diglycolamin (DGA), Di-isopropylamin (DIPA), Methyldiethanolamin (MDEA), aktiviertes Methyldiethanolamin (aMDEA) und allgemein sterisch gehinderte Amine oder Aminoalkohole.

Das beladene Waschmittel wird aus der Absorptionsvorrichtung abgezogen und anschließend einer Druckentspannungsstufe zugeführt, wobei beladenes Waschmittel mit verminderter Konzentration an gebundenen Gasbestandteilen erhalten wird, das aus der Druckentspannungsstufe abgezogen und der Regenerationsstufe zugeführt wird.

Vorzugsweise wird das kalte, beladene Waschmittel nicht unmittelbar der Absorptionsvorrichtung entnommen, sondern durchläuft zunächst zumindest eine Druckentspannungsstufe (flash-Stufe), bevor es beispielsweise einer Heißregenerierung als Regenerationsstufe zugeführt wird. Durch die Druckabsenkung in der Druckentspannungsstufe werden kalte Gase freigesetzt, wodurch sich die Konzentration an gebundenen Gasbestandteilen im beladenen Waschmittel vermindert. Die freigesetzten kalten Gase können an anderer Stelle im Gaswäsche-Verfahren durch indirekten Wärmeaustausch mit anderen Medien zum Kühlen verwendet werden Beispiele sind die Kühlung von Rohsynthesegas oder die zusätzliche Kühlung von regeneriertem Waschmittel, insbesondere Methanol. Je kälter das Waschmittel bei der Absorption, desto weniger Waschmittel muss verwendet werden. Dadurch kann der Zwischenbehälter entsprechend und in vorteilhafter Weise kleiner dimensioniert werden.

Die Druckentspannungsstufe kann einen oder mehrere hintereinandergeschaltete sogenannte "flash-Behälter" umfassen, wobei der Druck bei einer Mehrzahl von Flash-Behältern von Behälter zu Behälter sinkt.

Aus der Druckentspannungsstufe abgezogenes beladenes Waschmittel wird ferner, bevor es der Regenerationsstufe zugeführt wird, einem Reabsorber zugeführt. Die Verwendung eines Reabsorbers ist insbesondere im sogenannten selektiven Rectisol-Verfahren vorgesehen, jedoch auch in anderen Gaswäscheverfahren denkbar. Im Reabsorber wird gemäß selektivem Rectisol-Prozess CO₂ durch ein Inertgas wie N₂ aus dem beladenen Waschmittel (Methanol) ausgestrippt. Dabei unbeabsichtigt mitausgestripptes H₂S wird anschließend durch dem Reabsorber zugeführtes kaltes Methanol reabsorbiert. Dadurch gelangt es anschließend in die Regenerationsstufe, in der das H₂S durch Strippen mit Methanoldampf aus dem Waschmittel ausgetrieben und anschließend einer Claus-Anlage zur Gewinnung von elementarem Schwefel zugeführt wird.

Es hat sich gezeigt, dass die Verwendung einer zusätzlichen Druckentspannungsstufe überraschend weitere Vorteile zeigt. Die Menge an Wertgasen (H₂, CO), die mit regenerierten Waschmittel in den Zwischenbehälter gelangt, wird signifikant reduziert. Dadurch erhöht sich der Anteil an zurückgewonnen Wertgasen, die nicht beabsichtigt, jedoch unvermeidbar durch das Waschmittel absorbiert wurden. Gleichzeitig reduziert sich die in den Zwischenbehälter eingeschleppte Menge an nicht erwünschten Gasbestandteilen wie H₂S. Daraus resultiert der Vorteil, dass eine größere H₂S-Menge in die Regenerationsstufe, beispielsweise einen Heißregenerator, gelangt, und dadurch mehr H₂S für die Schwefelrückgewinnung im Claus-Prozess zur Verfügung steht. Gleichzeitig ergeben sich materialspezifische Vorteile, da im Zwischenbehälter weniger korrosives H₂S ausgast. Die Anforderungen an das für den Zwischenbehälter verwendete Material im Hinblick auf Korrosionsneigung sind entsprechend niedriger. Insgesamt ist es von Vorteil, wenn möglichst wenige Gase mit dem regenerierten Methanol in den Zwischenbehälter eingeschleppt werden, da es oft technische Probleme bereitet, ein sich über die Zeit aufbauendes Gaspolster wieder zu entfernen, insbesondere im Falle toxischer Gase wie CO und H₂S.

Ferner hat sich gezeigt, dass das der Regenerationsstufe zugeführte Waschmittel bei Verwendung einer Druckentspannungsstufe eine niedrigere Temperatur aufweist im Vergleich zur Verfahrensführung ohne Druckentspannungsstufe. Entsprechend weist das die Regenerationsstufe verlassende Waschmittel nach erfolgtem Wärmeaustausch ebenfalls eine niedrigere Temperatur auf, so dass eine nachgeschaltete Pumpe einen kleineren NPSH Wert erfordert (NPSHR wird kleiner) und der Zwischenbehälter eine niedrigere Betriebstemperatur aufweist, wodurch sich auch die Designtemperatur des Zwischenbehälters verringert. Insgesamt verringern sich dadurch die Investitionskosten für das benötigte Equipment.

Eine bevorzugte Ausführungsform des erfindungsgemäßen Verfahrens ist dadurch gekennzeichnet, dass das regenerierte Waschmittel nach dem Abziehen aus der Regenerationsstufe und/oder nach dem Abziehen aus dem Zwischenbehälter gekühlt wird. Wird das regenerierte Waschmittel nach dem Abziehen aus der Regenerationsstufe gekühlt, so sammelt sich im Zwischenbehälter eine größere Menge bereits vorgekühlten Waschmittels. Nachgeschaltete zur Verdichtung verwendete Pumpen können dadurch kleiner ausgelegt werden. Vorzugsweise wird das aus dem Zwischenbehälter abgezogene und anschließend auf Absorptionsdruck verdichtete regenerierte Waschmittel anschließend auf die für die Absorption optimale Temperatur gekühlt.

Dabei ist bevorzugt, dass das Kühlen durch indirekte Wärmeübertragung auf ein kaltes, beladenes Waschmittel erfolgt. Für eine optimale Wärmeintegration wird die Wärme des regenerierten Waschmittels auf aus der Absorptionsvorrichtung oder der Druckentspannungsstufe abgezogenes, kaltes und beladenes Waschmittel übertragen.

Eine bevorzugte Ausführungsform des erfindungsgemäßen Verfahrens ist dadurch gekennzeichnet, dass das regenerierte Waschmittel nach Abziehen aus dem Zwischenbehälter auf einen für den Betrieb der Absorptionsvorrichtung geeigneten Druck verdichtet wird. In vorteilhafter Weise wird das regenerierte Waschmittel erst nach dem Abziehen aus dem Zwischenbehälter auf den für die Absorption in der Absorptionsvorrichtung geforderten Druck verdichtet. Bei dieser Art der Verfahrensführung kann der Zwischenbehälter für Normaldruck ausgelegt werden, das heißt der Zwischenbehälter muss nicht als Druckbehälter ausgelegt werden.

Eine bevorzugte Ausführungsform des erfindungsgemäßen Verfahrens ist dadurch gekennzeichnet, dass sich eine im Zwischenbehälter vorhandene Menge an regeneriertem Waschmittel über einen Füllstand an regeneriertem Waschmittel in der Regenerationsstufe als Regelgröße einstellt. Vorzugsweise handelt es sich bei dem Füllstand an regeneriertem Waschmittel in der Regenerationsstufe um den Füllstand im Sumpf der für die Regenerationsstufe verwendeten Vorrichtung. In einem Beispiel ist der "Sumpf" ein Bereich auf einem gasdurchlässigen Boden in einer für die Regenerationsstufe verwendeten Vorrichtung. In einem Beispiel ist der gasdurchlässige Boden ein Kaminboden, beispielsweise in einer Stripp-Kolonne, auf dem sich die Flüssigkeit, hier das regenerierte Waschmittel, sammelt. Da der Füllstand an regeneriertem Waschmittel in der für die Regenerationsstufe verwendeten Vorrichtung die Regelgröße darstellt, kann über die Höhe des Füllstands die Menge an regeneriertem Waschmittel bestimmt werden, welche aus der Regenerationsstufe abgezogen und in den Zwischenbehälter überführt wird. Vorzugsweise wird der Füllstand derart geregelt, dass dieser einen weitgehend konstanten soll-Wert aufweist. Dadurch kann auf Schwankungen in der Beladung der Gaswäschevorrichtung mit Rohsynthesegas in einfacher Weise reagiert werden. Wird beispielsweise die Menge an Rohsynthesegas erhöht, und muss die Menge an zirkulierendem Waschmittel dementsprechend erhöht werden, so ist aus der Regenerationsstufe im Verhältnis mehr regeneriertes Waschmittel abzuführen, um einen konstanten Füllstand zu gewährleisten. Dementsprechend wird eine im Verhältnis größere Menge an regeneriertem Waschmittel in den Zwischenbehälter überführt. Vorgenanntes Prinzip gewährleistet somit eine erhöhte Flexibilität beim Betrieb der für die Regenerationsstufe verwendeten Vorrichtung. Aufgrund der Festlegung des Füllstands als Regelgröße in Zusammenspiel mit dem Zwischenbehälter erübrigt sich eine unnötig größere Auslegung der für die Regenerationsstufe verwendeten Vorrichtung, beispielsweise des Sumpfs einer Stripp-Kolonne. Mit anderen Worten, es ist nicht mehr erforderlich, einen Teil der für die Regenerationsstufe verwendeten Vorrichtung als Puffer-Zone zur "Lagerung" von regeneriertem Waschmittel in dieser Vorrichtung vorzusehen.

Eine bevorzugte Ausführungsform des erfindungsgemäßen Verfahrens ist dadurch gekennzeichnet, dass das Zuführen zum Zwischenbehälter kontinuierlich oder periodisch oder im Batchbetrieb, also absatzweise, erfolgt. Im laufenden Betrieb der Gaswäscheanlage erfolgt das Zuführen des regenerierten Waschmittels zum Zwischenbehälter kontinuierlich oder periodisch. Unter einem periodischen Zuführen wird dabei ein Sonderfall des kontinuierlichen Zuführens verstanden, bei dem der Zufuhr-Mengenstrom abwechselnd Null beträgt oder von Null verschieden ist. In bestimmten Fällen ist jedoch auch denkbar, den Zwischenbehälter batchweise mit regeneriertem Waschmittel zu befüllen, beispielsweise beim Testen einer Gaswäscheanlage, nachdem technische Probleme aufgetreten sind oder beim Anfahren der Anlage.

Das beladene Waschmittel wird in der Regenerationsstufe durch Strippen mit Waschmitteldampf regeneriert. Um das beladene Waschmittel vollständig oder zumindest nahezu vollständig von absorbierten Gasbestandteilen zu befreien, erfolgt das Regenerieren in der Regenerationsstufe durch eine Druckentspannung, verbunden mit der Zuführung eines Stripp-Gases in das Waschmittel, um absorbierte Gasbestandteile zu verdrängen. Handelt es sich bei dem Stripp-Gas um Waschmitteldampf, beispielsweise erzeugt durch einen Aufkocher, wird auch von Heißregenerierung gesprochen. Insbesondere durch Heißregenerierung wird ein weitgehend reines, also vollständig regeneriertes Waschmittel erhalten.

Das Rohsynthesegas weist zumindest Kohlenmonoxid (CO), Wasserstoff (H₂), Kohlendioxid (CO₂) und Schwefelwasserstoff (H₂S) auf, sowie optional wenigstens ein Element aus der Gruppe bestehend aus Carbonylsulfid (COS), Mercaptane (RSH), Cyanwasserstoff (HCN) und Ammoniak (NH₃). Bei CO und H₂ handelt es sich um die gewünschten Komponenten des Rohsynthesegases. Ein ausschließlich CO und H₂ aufweisendes Gasgemisch kann daher auch als "reines" Synthesegas bezeichnet werden. In einem Verarbeitungsschritt des Rohsynthesegases kann Kohlenmonoxid in der sogenannten Wassergas-Shift-Reaktion mit Wasser zu CO₂ und H₂ umgesetzt werden, um den H₂ Anteil im Synthesegas zu erhöhen. Alle weiteren der vorgenannten Komponenten sind nicht erwünschte Komponenten und werden im Gaswäscheverfahren durch Absorption vorzugsweise vollständig abgetrennt. Sehr kleine Restmengen dieser Komponenten (ppm-Bereich) können je nach geforderter Spezifikation tolerabel sein.

Die Offenbarung umfasst auch eine Vorrichtung zur Regenerierung eines beladenen Waschmittels aus einer Gaswäsche zur Reinigung von Rohsynthesegas, aufweisend folgende miteinander in Fluidverbindung stehende Bestandteile: Eine Regenerationsvorrichtung, in der gebundene Gasbestanteile aus einem beladenen Waschmittel entfernbar sind, wobei vorgesehen ist, dass die Vorrichtung einen Zwischenbehälter aufweist, in den ein in der Regenerationsvorrichtung erzeugbares regeneriertes Waschmittel überführbar und in dem das regenerierte Waschmittel lagerfähig ist.

Die offenbarte Vorrichtung eignet sich zur Regenerierung eines beladenen Waschmittels, wobei das Waschmittel in einer Gaswäsche zur Reinigung von Rohsynthesegas verwendet wird. Aufgrund dessen weist die Vorrichtung eine Regenerationsvorrichtung auf, in der gebundene Gasbestandteile aus einem beladenen Waschmittel entfernbar sind. Vorzugsweise liegen die gebundenen Gasbestandteile durch physikalische oder chemische Absorption oder eine Kombination aus beidem reversibel an das Waschmittel gebunden vor.

Bei der Regenerationsvorrichtung handelt es sich um dem Fachmann bekannte Vorrichtungen, wie beispielsweise um eine Stripp-Kolonne, die mit einem Stripp-Gas, vorzugsweise einem Inert-Gas wie beispielsweise Stickstoff, oder mit Waschmitteldampf als Stripp-Gas betrieben werden kann.

Die offenbarte Vorrichtung weist einen Zwischenbehälter auf, der über eine Fluidverbindung mit der Regenerationsvorrichtung in Verbindung steht. Eine Fluidverbindung ist eine Verbindung, die sich zum Transport beliebiger Fluide eignet, wie beispielsweise zum Transport von Gasen oder Flüssigkeiten. Der Zwischenbehälter ist mit der Regenerationsvorrichtung unmittelbar oder mittelbar verbunden. In letzterem Fall können zwischen dem Zwischenbehälter und der Regenerationsvorrichtung weitere Komponenten angeordnet sein, die wiederum über Fluidverbindungen untereinander, mit dem Zwischenbehälter oder der Regenerationsvorrichtung verbunden sind. Beispiele für weitere Komponenten sind eine Pumpe und ein Wärmeaustauscher.

Das in der Regenerationsvorrichtung erzeugbare, regenerierte Waschmittel ist in den Zwischenbehälter überführbar und kann in diesem gelagert werden. Vorzugsweise ist der Zwischenbehälter als Behälter ausgeführt, welcher bei Umgebungsdruck oder leicht oberhalb Umgebungsdruck (beispielsweise 2 bar) betrieben werden kann. Vorzugsweise ist der Zwischenbehälter nicht als Druckbehälter für mittlere oder hohe Betriebsdrücke ausgeführt. "Mittlere Drücke" sind in einem Beispiel Drücke zwischen 5 und 10 bar. "Hohe Drücke" sind in einem Beispiel Drücke zwischen 10 und 100 bar. Das regenerierte Waschmittel ist im Zwischenbehälter lagerfähig, das heißt es kann zum Zwecke der Lagerung im Zwischenbehälter beispielsweise im Falle eines ungeplanten oder geplanten Stillstandes gelagert werden. Dabei sind weitere Sicherheitsmaßnahmen nicht erforderlich, da das regenerierte Waschmittel aufgrund der vorgelagerten Regenerationsstufe keine toxischen oder umweltschädlichen Gasbestandteile aufweist.

Der Zwischenbehälter steht vorzugsweise über eine Fluidverbindung mit einer Absorptionsvorrichtung in Verbindung. Dadurch ist im Zwischenbehälter vorhandenes regeneriertes Waschmittel in die Absorptionsvorrichtung überführbar und kann in der Absorptionsvorrichtung zur Absorption weiterer unerwünschter Gasbestandteile aus einem Rohsynthesegas verwendet werden.

Der Zwischenbehälter ist mit der Absorptionsvorrichtung unmittelbar oder mittelbar verbunden. In letzterem Fall können zwischen dem Zwischenbehälter und der Absorptionsvorrichtung weitere Komponenten angeordnet sein, die wiederum über Fluidverbindungen untereinander, mit dem Zwischenbehälter oder der Absorptionsvorrichtung verbunden sind. Beispiele für weitere Komponenten sind eine Pumpe und ein Wärmeaustauscher.

Der Zwischenbehälter ist zwischen der Absorptionsvorrichtung und der Regenerationsvorrichtung angeordnet und über Fluidverbindungen mit der Absorptionsvorrichtung sowie der Regenerationsvorrichtung jeweils unmittelbar oder mittelbar verbunden.

Eine bevorzugte Ausführung der offenbarten Vorrichtung ist dadurch gekennzeichnet, dass dem Zwischenbehälter nachgelagert eine Pumpe zum Verdichten des regenerierten Waschmittels angeordnet ist. Vorzugsweise wird das im Zwischenbehälter vorhandene regenerierte Waschmittel nach Ausleiten aus dem Zwischenbehälter durch eine Pumpe auf einen Druck verdichtet, der sich für die anschließende Absorption in einer Absorptionsvorrichtung aufgrund der Druckabhängigkeit des Absorptionskoeffizienten, insbesondere bei physikalisch wirkenden Waschmitteln, eignet. In Zusammenhang mit Gegenständen der Erfindung bedeutet "nachgelagert", dass ein nachgelagertes Element in Flussrichtung des betreffenden Mediums hinter einem weiteren Element angeordnet ist. Das nachgelagerte Element ist somit stromabwärts gerichtet oder *downstream* im Verhältnis zum weiteren Element angeordnet. Für "vorgelagerte" Elemente gilt das vorgenannte Prinzip *vice versa.*

Eine bevorzugte Ausführung der offenbarten Vorrichtung ist dadurch gekennzeichnet, dass dem Zwischenbehälter vorgelagert und/oder nachgelagert ein Wärmeaustauscher zum Kühlen des regenerierten Waschmittels angeordnet ist. Wird das regenerierte Waschmittel nach dem Abziehen aus der Regenerationsvorrichtung durch einen Wärmeaustauscher gekühlt, so ist im Zwischenbehälter eine größere Menge bereits vorgekühlten Waschmittels vorhaltbar, wodurch nachgeschaltete, zur Verdichtung genutzte Pumpen kleiner dimensioniert werden können. Vorzugsweise wird aus dem Zwischenbehälter abgezogenes und anschließend auf Absorptionsdruck verdichtetes regenerierte Waschmittel durch einen nachgelagerten Wärmeaustauscher auf eine für die Absorption optimale Temperatur gekühlt.

Eine bevorzugte Ausführung der offenbarten Vorrichtung ist dadurch gekennzeichnet, dass die Regenerationsvorrichtung eine Stripp-Kolonne mit Aufkocher, Kopfkondensator und zumindest einem gasdurchlässigen Boden umfasst. Vorzugsweise handelt es sich bei der Regenerationsvorrichtung um eine für die Heißregenerierung geeignete Vorrichtung, die dementsprechend einen Aufkocher zum Verdampfen des Waschmittels, einen Kopfkondensator zum Kondensieren des regenerierten Waschmittels und einen gasdurchlässigen Boden umfasst. Auf dem gasdurchlässigen Boden sammelt sich das kondensierte regenerierte Waschmittel. Der gasdurchlässige Boden kann beispielsweise als Kaminboden ausgestaltet sein. Der gasdurchlässige Boden wird auch als Sumpf oder Sumpfbereich der Regenerationsvorrichtung bezeichnet. Das regenerierte Waschmittel ist aus dem Sumpf der Regenerationsvorrichtung abziehbar und in den Zwischenbehälter überführbar.

Eine bevorzugte Ausführung der offenbarten Vorrichtung ist dadurch gekennzeichnet, dass dem Zwischenbehälter vorgelagert ein Stellgerät zur Durchflussregelung angeordnet ist. Durch den Zwischenbehälter ist es erstmals möglich, die Menge des aus der Regenerationsvorrichtung abziehbaren Waschmittels zu regeln. Ein dem Zwischenbehälter vorgelagertes Stellgerät legt über eine Regelvorrichtung in Abhängigkeit von der im Waschmittelkreislauf zirkulierenden Waschmittelmenge die dem Zwischenbehälter zugeführte Menge an regeneriertem Waschmittel fest. Bei dem Stellgerät handelt es sich in einem Beispiel um ein Ventil.

Dabei weist die Regenerationsvorrichtung vorzugsweise eine Regelvorrichtung zum Regeln des Durchflusses des Stellgerätes über einen Füllstand an regeneriertem Waschmittel in der Regenerationsvorrichtung als Regelgröße auf, wodurch sich ein Füllstand an regeneriertem Waschmittel im Zwischenbehälter einstellt. Die Regelvorrichtung sorgt für einen weitgehend konstanten Füllstand (konstanter soll-Wert) an regeneriertem Waschmittel in der Regenerationsstufe. Dementsprechend erhöht sich der Durchfluss durch das Stellgerät bei einer Erhöhung der zirkulierenden Waschmittelmenge, beispielsweise aufgrund einer Erhöhung der zugeführten Rohsynthesegasmenge je Zeiteinheit. Entsprechend kann sich ein größerer Füllstand an regeneriertem Waschmittel im Zwischenbehälter einstellen, in Abhängigkeit von der aus dem Zwischenbehälter abgezogenen Waschmittelmenge. In vorteilhafter Weise kann dadurch auf ein Puffervolumen innerhalb der Regenerationsvorrichtung verzichtet werden, da Schwankungen in der Beladung mit Rohsynthesegas durch die Regelung des Füllstandes an regeneriertem Waschmittel in der Regenerationsvorrichtung in Zusammenspiel mit dem Zwischenbehälter einfach ausgeglichen werden können.

### Ausführungsbeispiel

Die Erfindung wird im Folgenden durch ein Beispiel näher erläutert, ohne den Gegenstand der Erfindung zu beschränken. Weitere Merkmale, Vorteile und Anwendungsmöglichkeiten der Erfindung ergeben sich aus der nachfolgenden Beschreibung des Ausführungsbeispiels in Zusammenhang mit den Zeichnungen.

Es zeigt
- Figur 1: eine schematische Fließbilddarstellung eines Verfahrens beziehungsweise einer Vorrichtung 100 zur Regenerierung eines beladenen Waschmittels nach dem Stand der Technik,
- Figur 2: eine schematische Fließbilddarstellung eines Verfahrens beziehungsweise einer Vorrichtung 200 zur Regenerierung eines beladenen Waschmittels nach dem Stand der Technik,
- Figur 3: eine schematische Fließbilddarstellung eines Verfahrens beziehungsweise einer Vorrichtung 300 zur Regenerierung eines beladenen Waschmittels gemäß einer Ausführungsform der Erfindung,
- Figur 4: eine schematische Fließbilddarstellung eines Verfahrens beziehungsweise einer Vorrichtung 400 zur Regenerierung eines beladenen Waschmittels gemäß einer weiteren Ausführungsform der Erfindung.

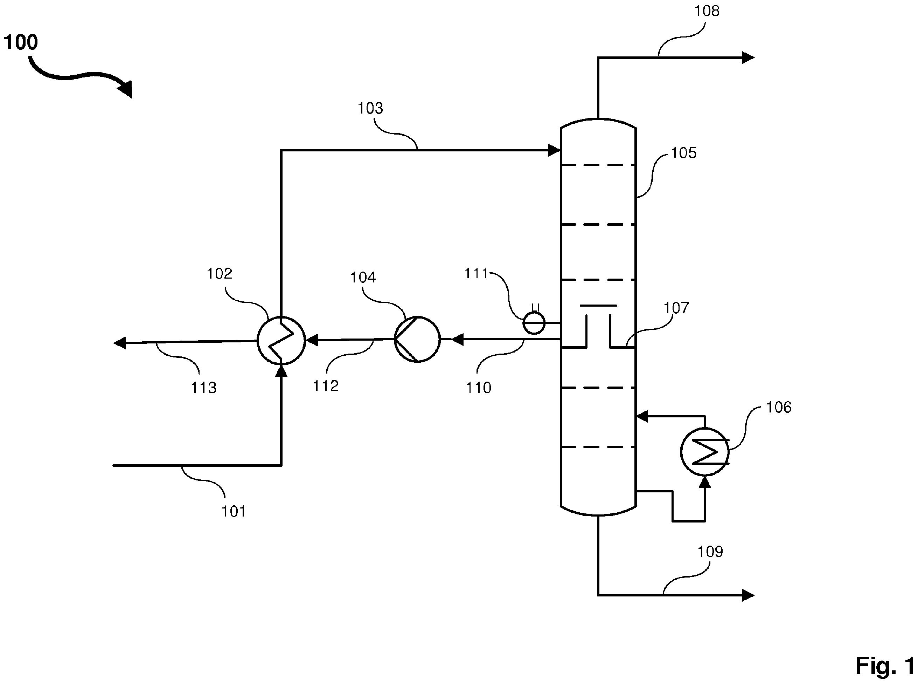

Figur 1 zeigt eine schematische Fließbilddarstellung eines Verfahrens oder einer Vorrichtung 100 zur Regenerierung eines beladenen Waschmittels wie aus dem Stand der Technik bekannt. Im Vergleichsbeispiel der Figur 1 wird Methanol als Waschmittel verwendet und mit Hilfe einer Vorrichtung zur Heißregenerierung regeneriert. Über Leitung 101 wird mit unerwünschten Synthesegasbestandteilen beladenes kaltes Methanol zugeführt, welches aus einer Absorptionsvorrichtung (nicht gezeigt) nachgeschalteten flash-Stufe (nicht gezeigt) abgezogen wurde. Das kalte Methanol in Leitung 101 ist zumindest mit Schwefelwasserstoff (H₂S) und Cyanwasserstoff (HCN) als zu entfernenden Komponenten beladen. Das kalte beladene Methanol wird in indirektem Wärmeaustauscher 102 im Gegenstrom mit regeneriertem Methanol vorgewärmt und über Leitung 103 Regenerationsvorrichtung 105 zugeführt.

Regenerationsvorrichtung 105 verfügt in einem unteren Bereich über einen Aufkocher 106, in einem mittleren Bereich über einen Kaminboden 107 und in einem oberen Bereich über einen Kopfkondensator (nicht gezeigt). Durch die vom Aufkocher 106 erzeugten Methanol-Dämpfe werden die unerwünschten Komponenten H₂S und HCN aus dem beladenen Methanol ausgetrieben und verlassen die Regenerationsvorrichtung über Leitung 108 zusammen mit nicht vom Kopfkondensator kondensierten Methanol. Nach Auskondensation von Methanol aus dem Gasgemisch wird das verbleibende Gasgemisch aus H₂S und HCN anschließend einer Claus-Anlage zur Schwefelrückgewinnung (nicht gezeigt) zugeführt. Im unteren Bereich der Regenerationsvorrichtung gesammeltes Methanol ist mit Wasser angereichert und wird über Leitung 109 abgezogen und einer Destillationsvorrichtung (nicht gezeigt) zur Methanol/Wasser Trennung zugeführt.

Vom Kopfkondensator kondensiertes, regeneriertes Methanol sammelt sich auf dem Kaminboden 107. Kaminboden 107 ist mit einer Füllstand-Messvorrichtung 111 (LI = level indication) ausgestattet. Füllstand-Messvorrichtung 111 ermöglicht die Messung und Kontrolle es Füllstands auf Kaminboden 107, nicht jedoch die Regelung des Füllstands. Kaminboden 107 ist dementsprechend groß dimensioniert, um bei Schwankungen der Menge des Rohsynthesegas-Feeds und damit Schwankungen in der Menge des zirkulierenden Methanols auch größere Mengen an regeneriertem Methanol aufnehmen zu können. Vom Kaminboden 107 abgezogenes, regeneriertes Methanol wird über Leitung 110 einer Pumpe 104 zur Verdichtung auf den in der Absorptionsvorrichtung herrschenden Druck (beispielsweise 60 bar) zugeführt. Das verdichtete regenerierte Methanol gelangt anschließend über Leitung 112 in den indirekten Wärmeaustauscher 102 und wird dort gegen kaltes Methanol aus Leitung 101 auf die für die Absorption erforderliche niedrige Temperatur (beispielsweise -50 °C) gekühlt. Anschließend wird das tiefkalte Methanol über Leitung 113 der Absorptionsvorrichtung (nicht gezeigt) zur erneuten Absorption von Gasbestandteilen aus Rohsynthesegas zugeführt. Indirekter Wärmeaustauscher 102 ist in Figur 1 als einzelner Wärmeaustauscher dargestellt. In der Praxis handelt es sich dabei üblicherweise um eine Gruppe von mehreren Wärmeaustauschern, wobei einer oder mehrerer dieser Wärmeaustauscher eine eigene Kühlmittelversorgung aufweisen können. Vorgenannte Wärmeaustauscher müssen für die in der Absorptionsvorrichtung herrschenden hohen Drücke (beispielsweise 60 bar) ausgelegt sein.

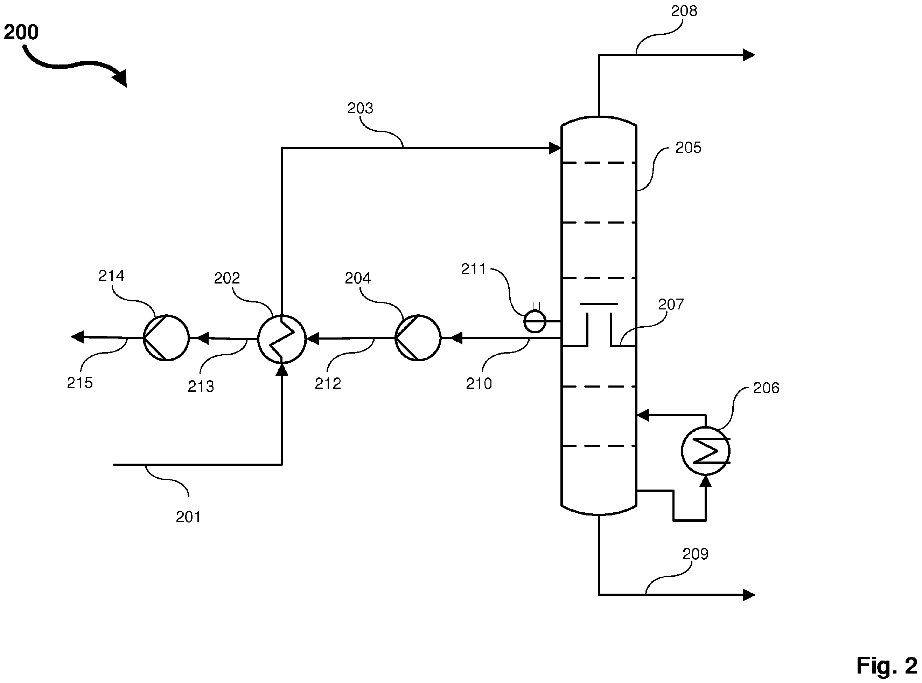

Figur 2 zeigt eine schematische Fließbilddarstellung eines Verfahrens oder einer Vorrichtung 200 zur Regenerierung eines beladenen Waschmittels wie aus dem Stand der Technik bekannt. Im Vergleichsbeispiel der Figur 2 wird Methanol als Waschmittel verwendet und mit Hilfe einer Vorrichtung zur Heißregenerierung regeneriert.

Bezugszeichen für Elemente der Figur 1 mit gleichen Einerstellen und Zehnerstellen wie in den Bezugszeichen der Figur 2 entsprechen gleichen Elementen. Beispielsweise entspricht die Leitung 101 in Figur 1 der Leitung 201 in Figur 2. Die Hunderterstelle des Bezugszeichens zeigt die Nummer der jeweiligen Figur an.

Das Verfahren beziehungsweise die Vorrichtung 200 gemäß Figur 2 unterscheidet sich vom Verfahren beziehungsweise der Vorrichtung 100 gemäß Figur 1 darin, dass eine zweite Pumpe 214 sowie eine zusätzliche Leitung 215 verwendet werden. Im Vergleichsbeispiel der Figur 2 wird aus der Regenerationsvorrichtung 205 über Leitung 210 abgezogenes regeneriertes Methanol einer Pumpe 204 zugeführt, in welcher das regenerierte Methanol auf einen mittleren Druck (beispielsweise 10 bar) vorverdichtet wird. Nach Abkühlung in Wärmeaustauscher 202 wird das vorverdichtete Methanol durch Pumpe 214 auf den für die Absorption erforderlichen hohen Druck (beispielsweise 60 bar) verdichtet und über Leitung 215 einer Absorptionsvorrichtung (nicht gezeigt) zugeführt.

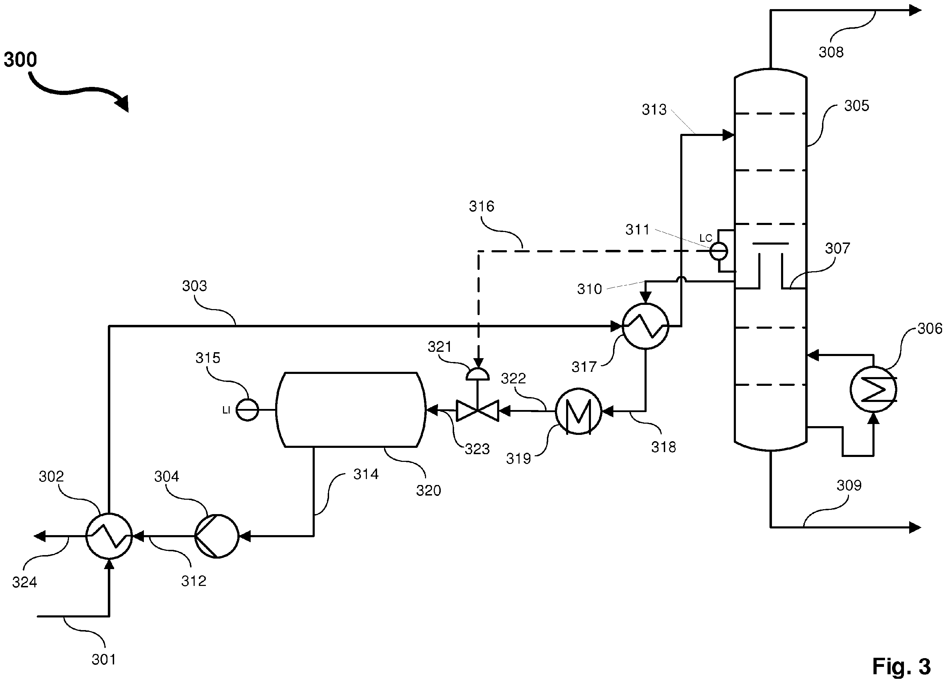

Figur 3 zeigt eine schematische Fließbilddarstellung eines Verfahrens oder einer Vorrichtung 300 zur Regenerierung eines beladenen Waschmittels gemäß einem Ausführungsbeispiel der Erfindung. Im erfindungsgemäßen Beispiel der Figur 3 wird Methanol als Waschmittel verwendet und mit Hilfe einer Vorrichtung zur Heißregenerierung regeneriert.

Über Leitung 301 wird mit zumindest Schwefelwasserstoff (H₂S) und Cyanwasserstoff (HCN) beladenes Methanol aus einer Absorptionsvorrichtung (nicht gezeigt) zugeführt und zunächst in indirektem Wärmeaustauscher 302 gegen regeneriertes Methanol aus Regenerationsvorrichtung 305 vorgewärmt. Das beladene Methanol gelangt anschließend in Wärmeaustauscher 317, wo es in einer weiteren Wärmeaustauschstufe gegen regeneriertes Methanol aus Regenerationsvorrichtung 305 vorgewärmt wird, bevor es über Leitung 313 der Regenerationsvorrichtung 305 zugeführt wird. Regenerationsvorrichtung 305 ist als Stripp-Kolonne zur Heißregenerierung ausgestaltet und verfügt über einen Aufkocher 306, einen Kaminboden 307 und einen Kopfkondensator (nicht gezeigt). Durch vom Aufkocher 306 erzeugte Methanol-Dämpfe wird beladenes Methanol in der Regenerationsvorrichtung 305 weitgehend von H₂S und HCN befreit. Vorgenannte, nicht im Synthesegas erwünschte Gasbestandteile verlassen zusammen mit nicht vom Kopfkondensator vollständig kondensierten Methanol-Dämpfen die Regenerationsvorrichtung 305 über Leitung 308. Nach Auskondensation der Methanol-Dämpfe aus dem H₂S und HCN enthaltenden Sauergasgemisch in einem Abscheider wird das Sauergasgemisch einer Claus-Anlage zur Rückgewinnung von Schwefel zugeführt (nicht gezeigt).

Im unteren Bereich der Regenerationsvorrichtung 305 sammelt sich mit Wasser angereichertes Methanol, welches über Leitung 309 abgezogen und einer Destillationsvorrichtung zur Methanol-Wasser-Trennung zugeführt wird.

Regeneriertes, von sämtlichen Sauergasen befreites Methanol sammelt sich auf Kaminboden 307. Kaminboden 307 wird in Zusammenhang mit der Erfindung auch als Sumpf der Regenerationsvorrichtung bezeichnet. Der Füllstand auf Kaminboden 307 wird über die Füllstand-Regelvorrichtung 311 geregelt. Füllstand-Regelvorrichtung 311 regelt die Menge an regeneriertem Methanol, welche über Leitung 310 aus der Regenerationsvorrichtung abgezogen wird. Wird der Synthesegas-Feed und damit die zirkulierende Methanol-Menge beispielsweise erhöht, wird eine größere Menge regeneriertes Methanol pro Zeiteinheit über Leitung 310 abgezogen, um den Füllstand auf dem Kaminboden 307 konstant zu halten. Füllstand-Regelvorrichtung 311 regelt die über Leitung abzunehmende Menge mit Hilfe eines Stellgeräts, in diesem Fall Regelventil 321, welches über eine Regelstrecke 316 mit Füllstand-Regelvorrichtung 311 in Kommunikation steht. Über Leitung 310 abgezogenes regeneriertes Methanol wird im indirekten Wärmeaustauscher 317 gegen beladenes Methanol aus Leitung 303 vorgekühlt, gelangt über Leitung 318 in einen weiteren Wärmeaustauscher 319 und schließlich über die Leitungen 322 und 323 sowie Regelventil 321 in Zwischenbehälter 320. Zwischenbehälter 320 ist für Normaldruck oder leichten Überdruck als Betriebsdruck (beispielsweise 2 bar) ausgelegt. Optional ist Zwischenbehälter 320 thermoisoliert, das heißt auf seiner Außenseite mit einer Isolierschicht versehen, damit sich das vorgekühlte regenerierte Methanol im Zwischenbehälter 320 möglichst nicht erwärmt. Zur Kontrolle des Füllstandes ist Zwischenbehälter 320 mit einer Füllstand-Messvorrichtung 315 ausgestattet. Zwischenbehälter 320 eignet sich für die Langzeitlagerung von regeneriertem Methanol und ist daher aus einem dafür geeigneten Werkstoff gefertigt.

Aufgrund des Vorhandenseins des Zwischenbehälters 320 in Verbindung mit den Komponenten 311, 316 und 321 der Regelvorrichtung ist Regenerationsvorrichtung 305, insbesondere der Bereich um den Kaminboden 307 oder Sumpf, kleiner ausgelegt als Regenerationsvorrichtungen 105, 205 gemäß den Vergleichsbeispielen.

Vorgekühltes, regeneriertes Methanol wird aus Zwischenbehälter 320 über Leitung 314 abgezogen und mit Hilfe der Pumpe 304 auf den in der Absorptionsvorrichtung herrschenden Druck (beispielsweise 60 bar) verdichtet. Das verdichtete Methanol wird anschließend über Leitung 312 Wärmeaustauscher 302 zugeführt, in dem es gegen beladenes Methanol aus Leitung 301 auf die in der Absorptionsvorrichtung herrschende Temperatur weiter heruntergekühlt wird. Schließlich gelangt das tiefkalte, regenerierte Methanol über Leitung 324 in die Absorptionsvorrichtung um dort erneut unerwünschte Gasbestandteile aus Rohsynthesegas aufzunehmen.

Da die Verdichtung des regenerierten Methanols durch Pumpe 304 erfolgt, und Pumpe 304 dem Zwischenbehälter 320 nachgelagert (downstream) angeordnet ist, können die dem Zwischenbehälter 320 vorgelagerten Wärmeaustauscher 317 und 319 in vorteilhafter Weise bei Normaldruck oder leichtem Überdruck betrieben werden.

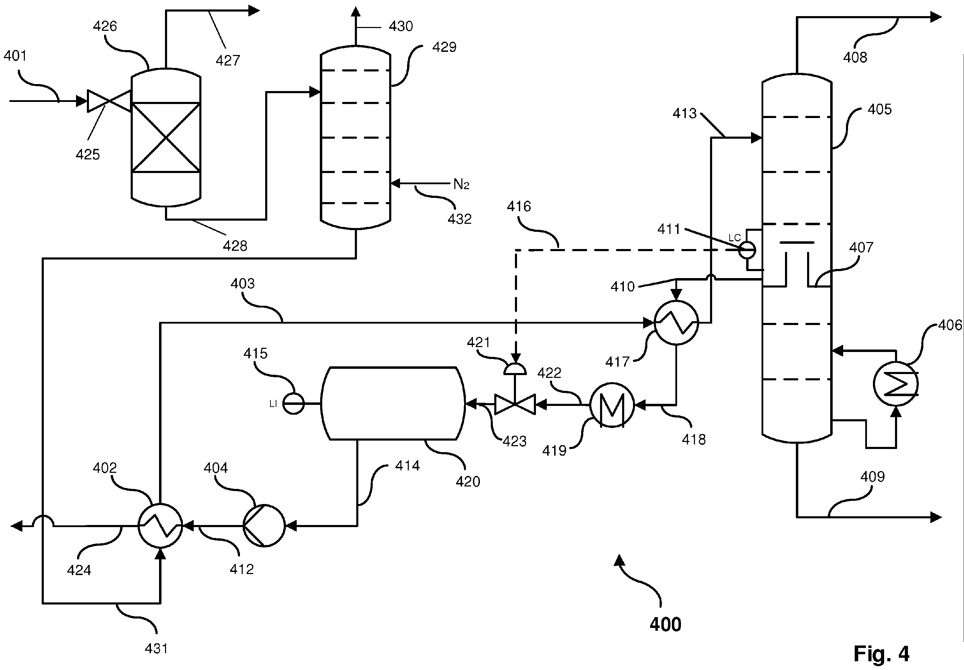

Figur 4 zeigt eine schematische Fließbilddarstellung eines Verfahrens oder einer Vorrichtung 400 zur Regenerierung eines beladenen Waschmittels gemäß einem weiteren Ausführungsbeispiel der Erfindung. Im erfindungsgemäßen Beispiel gemäß Figur 4 wird Methanol als Waschmittel verwendet und mit Hilfe einer Vorrichtung zur Heißregenerierung regeneriert. Im Vergleich zur Verfahrensführung gemäß Figur 3 wird das beladene Waschmittel nach Verlassen der Absorptionsvorrichtung zunächst einem Flash-Behälter als Druckentspannungsstufe und anschließend einem Reabsorber zugeführt, bevor es der Regenerationsvorrichtung zugeführt wird.

Über Leitung 401 wird zumindest mit Kohlendioxid (CO₂), Schwefelwasserstoff (H₂S) und Cyanwasserstoff (HCN) beladenes Methanol aus einer Absorptionsvorrichtung (nicht gezeigt) zugeführt und über Druckminderungsventil 425 in den Flash-Behälter (Druckentspannungsstufe) 426 hinein entspannt. Bei der Druckentspannung desorbierte Gase verlassen den Flash-Behälter 426 über Leitung 427. Da die Gase in Leitung 427 Wertgase wie H₂ und CO enthalten, werden sie über einen Kompressor rückverdichtet und erneut der Absorptionsvorrichtung zugeführt. Die über Leitung 427 abgezogenen kalten Gase können ferner an anderer Stelle im Gaswäsche-Verfahren durch indirekten Wärmeaustausch mit einem weiteren Fluid zum Kühlen verwendet werden. Beispiele sind die Kühlung des der Absorptionsvorrichtung zugeführten Rohsynthesegases oder die zusätzliche Kühlung von regeneriertem Methanol aus Leitung 410 oder aus Leitung 414, wobei die Kühlung in den Wärmeaustauschern 417 beziehungsweise 402 stattfindet.

Das mit einer durch die Druckentspannung verminderten Gaskonzentration beladene Methanol wird über Leitung 428 aus dem Flash-Behälter abgezogen und einem Reabsorber 429 zugeführt. Im Reabsorber 429 wird CO₂ aus dem beladenen Methanol durch über Leitung 432 zugeführten Stickstoff ausgetrieben (gestrippt), wobei nicht zu vermeiden ist das gewisse Mengen an Schwefelwasserstoff (H₂S) mit ausgetrieben werden. Mitausgetriebenes H₂S-Gas wird durch über Leitung 428 zugeführtes beladenes Methanol reabsorbiert. Zur Reabsorption kann zusätzlich ein Teilstrom des heißregenerierten Methanols aus Leitung 424 verwendet werden (nicht gezeigt). Der hauptsächlich CO₂ und N₂ enthaltende Gasstrom verlässt den Reabsorber über Leitung 430. Hauptsächlich mit H₂S beladenes Methanol wird über Leitung 431 aus dem Reabsorber 429 abgezogen und in indirektem Wärmeaustauscher 402 gegen regeneriertes Methanol aus Regenerationsvorrichtung 405 vorgewärmt. Das beladene Methanol gelangt anschließend in Wärmeaustauscher 417, wo es in einer weiteren Wärmeaustauschstufe gegen regeneriertes Methanol aus Regenerationsvorrichtung 405 vorgewärmt wird, bevor es über Leitung 413 der Regenerationsvorrichtung 405 zugeführt wird. Regenerationsvorrichtung 405 ist als Stripp-Kolonne zur Heißregenerierung ausgestaltet und verfügt über einen Aufkocher 406, einen Kaminboden 407 und einen Kopfkondensator (nicht gezeigt). Durch vom Aufkocher 406 erzeugte Methanol-Dämpfe wird beladenes Methanol in der Regenerationsvorrichtung 405 weitgehend von H₂S befreit. Vorgenannte, nicht im Synthesegas erwünschte Gasbestandteile verlassen zusammen mit nicht vom Kopfkondensator vollständig kondensierten Methanol-Dämpfen die Regenerationsvorrichtung 405 über Leitung 408. Nach Auskondensation der Methanol-Dämpfe aus dem H₂S und HCN enthaltenden Sauergasgemisch in einem Abscheider wird das Sauergasgemisch einer Claus-Anlage zur Rückgewinnung von Schwefel zugeführt (nicht gezeigt).

Im unteren Bereich der Regenerationsvorrichtung 405 sammelt sich mit Wasser angereichertes Methanol, welches über Leitung 409 abgezogen und einer Destillationsvorrichtung zur Methanol-Wasser-Trennung zugeführt wird.

Regeneriertes, von sämtlichen Sauergasen befreites Methanol sammelt sich auf Kaminboden 407. Kaminboden 407 wird in Zusammenhang mit der Erfindung auch als Sumpf der Regenerationsvorrichtung bezeichnet. Der Füllstand auf Kaminboden 407 wird über die Füllstand-Regelvorrichtung 411 geregelt. Füllstand-Regelvorrichtung 411 regelt die Menge an regeneriertem Methanol, welche über Leitung 410 aus der Regenerationsvorrichtung abgezogen wird. Wird der Synthesegas-Feed und damit die zirkulierende Methanol-Menge beispielsweise erhöht, wird eine größere Menge regeneriertes Methanol pro Zeiteinheit über Leitung 410 abgezogen, um den Füllstand auf dem Kaminboden 407 konstant zu halten. Füllstand-Regelvorrichtung 411 regelt die über Leitung 410 abzunehmende Menge mit Hilfe eines Stellgeräts, in diesem Fall Regelventil 421, welches über eine Regelstrecke 416 mit Füllstand-Regelvorrichtung 411 in Kommunikation steht. Über Leitung 410 abgezogenes regeneriertes Methanol wird im indirekten Wärmeaustauscher 417 gegen beladenes Methanol aus Leitung 403 vorgekühlt, gelangt über Leitung 418 in einen weiteren Wärmeaustauscher 419 und schließlich über die Leitungen 422 und 423 sowie Regelventil 421 in Zwischenbehälter 420. Zwischenbehälter 420 ist für Normaldruck oder leichten Überdruck als Betriebsdruck (beispielsweise 2 bar) ausgelegt. Optional ist Zwischenbehälter 420 thermoisoliert, das heißt auf seiner Außenseite mit einer Isolierschicht versehen, damit sich das vorgekühlte regenerierte Methanol im Zwischenbehälter 420 möglichst nicht erwärmt. Zur Kontrolle des Füllstandes ist Zwischenbehälter 420 mit einer Füllstand-Messvorrichtung 415 ausgestattet. Zwischenbehälter 420 eignet sich für die Langzeitlagerung von regeneriertem Methanol und ist daher aus einem dafür geeigneten Werkstoff gefertigt.

Obwohl beladenes Methanol in einer Vorrichtung zur Heißregenerierung 405 regeneriert wird, so gelangen trotzdem kleinere Restmengen an H₂S (Spurenmengen) mit dem regenerierten Methanol in den Zwischenbehälter 430. Aufgrund der Verwendung des Flash-Behälters 426 ist diese H₂S Menge nochmals vermindert, was bei der Materialauswahl für den Zwischenbehälter 420 in vorteilhafter Weise berücksichtigt werden kann.

Aufgrund des Vorhandenseins des Zwischenbehälters 420 in Verbindung mit den Komponenten 411, 416 und 421 der Regelvorrichtung ist Regenerationsvorrichtung 405, insbesondere der Bereich um den Kaminboden 407 oder Sumpf, kleiner ausgelegt als Regenerationsvorrichtungen 105, 205 gemäß den Vergleichsbeispielen.

Vorgekühltes, regeneriertes Methanol wird aus Zwischenbehälter 420 über Leitung 414 abgezogen und mit Hilfe der Pumpe 404 auf den in der Absorptionsvorrichtung herrschenden Druck (beispielsweise 60 bar) verdichtet. Das verdichtete Methanol wird anschließend über Leitung 412 Wärmeaustauscher 402 zugeführt, in dem es gegen beladenes Methanol aus Leitung 431 auf die in der Absorptionsvorrichtung herrschende Temperatur weiter heruntergekühlt wird. Schließlich gelangt das tiefkalte, regenerierte Methanol über Leitung 424 in die Absorptionsvorrichtung um dort erneut unerwünschte Gasbestandteile aus Rohsynthesegas aufzunehmen.

Da die Verdichtung des regenerierten Methanols durch Pumpe 404 erfolgt, und Pumpe 404 dem Zwischenbehälter 420 nachgelagert (downstream) angeordnet ist, können die dem Zwischenbehälter 420 vorgelagerten Wärmeaustauscher 417 und 419 in vorteilhafter Weise bei Normaldruck oder leichtem Überdruck betrieben werden.

Das folgende Zahlenbeispiel zeigt einen Vergleich zwischen den Ausführungsformen der Figur 3 und der Figur 4 in Bezug auf im regenerierten Methanol des Zwischenbehälters auffindbare Restmengen (Spurenmengen) an Wertgasen (H₂, CO) sowie H₂S. Ferner zeigt das Zahlenbeispiel die Unterschiede zwischen den in den Hauptwärmeaustauschern (302 und 317 in Figur 3; 402 und 417 in Figur 4) übertragenen Wärmemengen, und den Kältemittelverbrauch zwischen den verschiedenen Absorptionsstufen der Absorptionsvorrichtung.

Das der Absorptionsvorrichtung zugeführte Rohsynthesegas weist in beiden Beispielen (Figur 3 und Figur 4) die gleiche Zusammensetzung auf, gemäß folgender Tabelle. Es handelt sich um ein teilweise "geshiftetes" Rohsynthesegas, das heißt ein Teil des im Rohsynthesegas vorhandenen Kohlenmonoxids wurde in einer Wassergas-Shift-Reaktion mit Wasser zu Wasserstoff und Kohlendioxid umgesetzt.

| Komponente im Rohsynthesegas | Anteil in mol-% |
|---|---|
| CO | 27,80 |
| H2 | 43,01 |
| CO₂ | 28,47 |
| N2 | 0,38 |
| Ar | 0,10 |
| H₂S | 0,23 |
| COS | 0,01 |

Die folgenden Werte wurden mit Hilfe der Simulationssoftware "Aspen Plus" berechnet. Zum besseren Vergleich wurden die für das Beispiel der Figur 3 berechneten Zahlenwerte normiert, das heißt auf 100 % gesetzt. Der der Absorptionsvorrichtung zugeführte Volumenstrom an Rohsynthesegas beträgt in beiden Beispielen 1 000 000 Nm³/h bei einem Absorptionsdruck von 34 bar.

| | Beispiel Figur 3 (ohne flash-Behälter) | Beispiel Figur 4 (mit flash-Behälter) |
|---|---|---|
| Restbeladung Wertgase (H₂, CO) im regenerierten Methanol* | 100 % | 5 % |
| H₂ + CO Rückgewinnung | 100 % | 143 % |
| Restbeladung H₂S im regenerierten Methanol* | 100 % | 75 % |
| H₂S im Claus-Gas | 100 % | 128 % |
| Hauptwärmeaustauscher | 100 % | 94 % |
| Kältemittelverbrauch | 100 % | 86 % |

| | | |
|---|---|---|
| *wie im Zwischenbehälter auffindbar | | |

Die Zahlenwerte zeigen die überraschenden Vorteile der erfindungsgemäßen Ausführungsform gemäß Figur 4 (mit flash-Behälter) gegenüber der erfindungsgemäßen Ausführungsform gemäß Figur 3 (ohne flash-Behälter).

Durch die Verwendung eines flash-Behälters (Druckentspannungsstufe) sinkt die Restbeladung an im regenerierten Methanol des Zwischenbehälters auffindbaren Wertgasen signifikant um einen Faktor von 20. Entsprechend werden etwas größere Mengen an H₂ und CO zurückgewonnen (Steigerung um 43 %). Dabei sei nochmals erwähnt, dass sich die vorgenannten Zahlen auf die in die Regenerationsvorrichtung (305, 405) eingeschleppten Restbeladungen an Wertgasen beziehen. Gleichzeitig verringert sich die in den Zwischenbehälter eingeschleppte Restbeladung an H₂S um 25 %, wodurch die entsprechende Menge an H₂S im die Regenerationsvorrichtung über die Leitungen 308 beziehungsweise 408 verlassenden "Claus-Gas" um 28 % steigt.

Ferner führt die Verwendung eines Flash-Behälters überraschenderweise dazu, dass in den Hauptwärmeaustauschern 402 und 417 eine um 6 % geringere Menge an Wärme im Vergleich zu den Hauptwärmeaustauschern 302 und 317 übertragen wird. Gleichzeitig sinkt der Kältemittelverbrauch der Kältemittelverdampfer, die zwischen den einzelnen Absorptionsstufen der Absorptionsvorrichtung das CO₂ beladene Methanol herunterkühlen.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination zwischen Merkmalen in Bezug auf verschiede Arten von Gegenständen oder Anspruchstypen in Betracht gezogen werden

Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnungen, der Offenbarung und der nachfolgenden Ansprüche verstanden und ausgeführt werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 100: Verfahren / Vorrichtung
- 101: Leitung
- 102: Wärmeaustauscher
- 103: Leitung
- 104: Pumpe
- 105: Regenerationsvorrichtung
- 106: Aufkocher
- 107: Kaminboden
- 108: Leitung
- 109: Leitung
- 110: Leitung
- 111: Füllstand-Messvorrichtung
- 112: Leitung
- 113: Leitung

- 200: Verfahren / Vorrichtung
- 201: Leitung
- 202: Wärmeaustauscher
- 203: Leitung
- 204: Pumpe
- 205: Regenerationsvorrichtung
- 206: Aufkocher
- 207: Kaminboden
- 208: Leitung
- 209: Leitung
- 210: Leitung
- 211: Füllstand-Messvorrichtung
- 212: Leitung
- 213: Leitung
- 214: Pumpe
- 215: Leitung
- 300: Verfahren / Vorrichtung
- 301: Leitung
- 302: Wärmeaustauscher
- 303: Leitung
- 304: Pumpe
- 305: Regenerationsvorrichtung
- 306: Aufkocher
- 307: Kaminboden
- 308: Leitung
- 309: Leitung
- 310: Leitung
- 311: Füllstand-Regelvorrichtung
- 312: Leitung
- 313: Leitung
- 314: Leitung
- 315: Füllstand-Messvorrichtung
- 316: Regelstrecke
- 317: Wärmeaustauscher
- 318: Leitung
- 319: Wärmeaustauscher
- 320: Zwischenbehälter
- 321: Regelventil
- 322: Leitung
- 323: Leitung
- 324: Leitung

- 400: Verfahren / Vorrichtung
- 401: Leitung
- 402: Wärmeaustauscher
- 403: Leitung
- 404: Pumpe
- 405: Regenerationsvorrichtung
- 406: Aufkocher
- 407: Kaminboden
- 408: Leitung
- 409: Leitung
- 410: Leitung
- 411: Füllstand-Regelvorrichtung
- 412: Leitung
- 413: Leitung
- 414: Leitung
- 415: Füllstand-Messvorrichtung
- 416: Regelstrecke
- 417: Wärmeaustauscher
- 418: Leitung
- 419: Wärmeaustauscher
- 420: Zwischenbehälter
- 421: Regelventil
- 422: Leitung
- 423: Leitung
- 424: Leitung
- 425: Druckminderungsventil
- 426: Flash-Behälter
- 427: Leitung
- 428: Leitung
- 429: Reabsorber
- 430: Leitung
- 431: Leitung
- 432: Leitung

## Patentansprüche

1. Verfahren (400) zur Regenerierung eines beladenen Waschmittels aus einer Gaswäsche zur Reinigung von Rohsynthesegas, wobei
das Rohsynthesegas zumindest Kohlenmonoxid (CO), Wasserstoff (H₂), Kohlendioxid (CO₂) und Schwefelwasserstoff (H₂S) aufweist,
bei dem das beladene Waschmittel in einer Regenerationsstufe (405) von gebundenen Gasbestandteilen zumindest teilweise befreit wird,
wobei ein regeneriertes Waschmittel erhalten wird,
wobei das beladene Waschmittel in der Regenerationsstufe (405) durch Strippen mit Waschmitteldampf regeneriert wird,
und wobei es sich bei der Gaswäsche um eine physikalisch wirkende Gaswäsche handelt, und das Waschmittel Methanol als Hauptbestandteil aufweist, wobei der Anteil an Methanol im Waschmittel mindestens 75 Gew.-% umfasst,
wobei das regenerierte Waschmittel nach Abziehen aus der Regenerationsstufe (405) einem Zwischenbehälter (420) zugeführt wird, und das regenerierte Waschmittel aus dem Zwischenbehälter (420) abgezogen und einer Absorptionsvorrichtung zur Reinigung von Rohsynthesegas zugeführt wird, und
beladenes Waschmittel aus der Absorptionsvorrichtung abgezogen und anschließend einer Druckentspannungsstufe (426) zugeführt wird, wobei beladenes Waschmittel mit verminderter Konzentration an gebundenen Gasbestandteilen erhalten wird, das aus der Druckentspannungsstufe (426) abgezogen und der Regenerationsstufe (405) zugeführt wird, und
aus der Druckentspannungsstufe (426) abgezogenes Waschmittel vor Zuführung zur Regenerationsstufe (405) einem Reabsorber (429) zugeführt wird, wobei
im Reabsorber (429) CO₂ durch ein Inertgas aus dem beladenen Waschmittel ausgestrippt wird, und im Reabsorber (429) unbeabsichtigt mitausgestripptes H₂S durch dem Reabsorber (429) zugeführtes, aus der Druckentspannungsstufe (426) abgezogenes beladenes Methanol reabsorbiert wird.

2. Verfahren nach Anspruch 1, **dadurch gekennzeichnet, dass** das Waschmittel aus Methanol besteht.

3. Verfahren nach einem der vorherigen Ansprüche, **dadurch gekennzeichnet, dass** das regenerierte Waschmittel nach dem Abziehen aus der Regenerationsstufe (405) und/oder nach dem Abziehen aus dem Zwischenbehälter (420) gekühlt wird.

4. Verfahren nach Anspruch 3, **dadurch gekennzeichnet, dass** das Kühlen durch indirekte Wärmeübertragung auf ein kaltes, beladenes Waschmittel erfolgt.

5. Verfahren nach einem der vorherigen Ansprüche, **dadurch gekennzeichnet, dass** das regenerierte Waschmittel nach Abziehen aus dem Zwischenbehälter (420) auf einen für den Betrieb der Absorptionsvorrichtung geeigneten Druck verdichtet wird.

6. Verfahren nach einem der vorherigen Ansprüche, **dadurch gekennzeichnet, dass** sich eine im Zwischenbehälter (420) vorhandene Menge an regeneriertem Waschmittel über einen Füllstand an regeneriertem Waschmittel in der Regenerationsstufe (405) als Regelgröße einstellt.

7. Verfahren nach einem der vorherigen Ansprüche, **dadurch gekennzeichnet, dass** das Zuführen zum Zwischenbehälter (420) kontinuierlich oder periodisch oder im Batchbetrieb erfolgt.

8. Verfahren nach einem der vorherigen Ansprüche, **dadurch gekennzeichnet, dass** das Rohsynthesegas optional wenigstens ein Element aus der Gruppe bestehend aus Carbonylsulfid (COS), Mercaptane (RSH), Cyanwasserstoff (HCN) und Ammoniak (NH₃) aufweist.

## Claims

1. Process (400) for regenerating a laden scrubbing medium from a gas scrubbing for purification of raw synthesis gas, wherein
the raw synthesis gas comprises at least carbon monoxide (CO), hydrogen (H₂), carbon dioxide (CO₂) and hydrogen sulfide (H₂S),
in which the laden scrubbing medium is at least partially freed of bound gas constituents in a regeneration stage (405),
to obtain a regenerated scrubbing medium,
wherein the laden scrubbing medium is regenerated by stripping with scrubbing medium vapour in the regeneration stage (405)
and wherein the gas scrubbing is a physical gas scrubbing and the scrubbing medium comprises methanol as the main constituent, wherein the proportion of methanol in the scrubbing medium comprises at least 75% by weight, wherein after withdrawal from the regeneration stage (405) the regenerated scrubbing medium is supplied to an intermediate vessel (420) and the regenerated scrubbing medium is withdrawn from the intermediate vessel (420) and supplied to an absorption apparatus for purifying raw synthesis gas and
laden scrubbing medium is withdrawn from the absorption apparatus and subsequently supplied to a decompression stage (426) to obtain laden scrubbing medium having a reduced concentration of bound gas constituents which is withdrawn from the decompression stage (426) and supplied to the regeneration stage (405) and
scrubbing medium withdrawn from the decompression stage (426) is supplied to a reabsorber (429) before it is supplied to the regeneration stage (405), wherein
CO₂ is stripped out of the laden scrubbing medium by an inert gas in the reabsorber (429) and any H₂S unintentionally co-stripped in the reabsorber (429) is reabsorbed by laden methanol withdrawn from the decompression stage (426) and supplied to the reabsorber (429) .

2. Process according to Claim 1, **characterized in that** the scrubbing medium consists of methanol.

3. Process according to any of the preceding claims, **characterized in that** the regenerated scrubbing medium is cooled after withdrawal from the regeneration stage (405) and/or after withdrawal from the intermediate vessel (420).

4. Process according to Claim 3, **characterized in that** the cooling is carried out by indirect heat transfer to a cold, laden scrubbing medium.

5. Process according to any of the preceding claims, **characterized in that** after withdrawal from the intermediate vessel (420) the regenerated scrubbing medium is compressed to a pressure suitable for operating the absorption apparatus.

6. Process according to any of the preceding claims, **characterized in that** an amount of regenerated scrubbing medium present in the intermediate vessel (420) is established as a controlled variable via a fill level of regenerated scrubbing medium in the regeneration stage (405) .

7. Process according to any of the preceding claims, **characterized in that** the supplying to the intermediate vessel (420) is carried out continuously or periodically or in batch operation.

8. Process according to any of the preceding claims, **characterized in that** the raw synthesis gas optionally comprises at least one element from the group consisting of carbonyl sulfide (COS), mercaptans (RSH), hydrogen cyanide (HCN) and ammonia (NH₃).

## Revendications

1. Procédé (400) pour la régénération d'un agent de lavage chargé, provenant d'un lavage de gaz destiné à l'épuration de gaz de synthèse brut,
le gaz de synthèse brut comportant au moins du monoxyde de carbone (CO), de l'hydrogène (H₂), du dioxyde de carbone (CO₂) et du sulfure d'hydrogène (H₂S),
dans lequel l'agent de lavage chargé est dans un étage de régénération (405) au moins partiellement libéré de constituants de gaz liés,
avec obtention d'un agent de lavage régénéré,
dans lequel l'agent de lavage chargé est régénéré dans l'étage de régénération (405) par extraction à la vapeur avec de la vapeur d'agent de lavage,
et dans lequel, pour ce qui est du lavage de gaz il s'agit d'un lavage de gaz à action physique, et l'agent de lavage comporte du méthanol en tant que constituant principal, la proportion de méthanol dans l'agent de lavage constituant au moins 75 % en poids,
dans lequel après avoir été soutiré de l'étage de régénération (405) l'agent de lavage régénéré est envoyé à un récipient intermédiaire (420), et l'agent de lavage régénéré est soutiré du récipient intermédiaire (420) et envoyé à un dispositif d'absorption destiné à l'épuration de gaz de synthèse brut, et
de l'agent de lavage chargé est soutiré du dispositif d'absorption et ensuite envoyé à un étage de détente de pression (426), avec obtention d'agent de lavage chargé à teneur réduite en constituants de gaz liés, qui est soutiré de l'étage de détente de pression (426) et envoyé à l'étage de régénération (405), et
avant l'envoi à l'étage de régénération (405), de l'agent de lavage soutiré de l'étage de détente de pression (426) est envoyé à un réabsorbeur (429),
dans le réabsorbeur (429) du CO₂ étant extrait au gaz par un gaz inerte à partir de l'agent de lavage chargé, et du H₂S involontairement extrait au gaz en même temps dans le réabsorbeur (429) étant réabsorbé par du méthanol chargé, soutiré de l'étage de détente de pression (426), envoyé au réabsorbeur (429).

2. Procédé selon la revendication 1, **caractérisé en ce que** l'agent de lavage consiste en méthanol.

3. Procédé selon l'une quelconque des revendications précédentes, **caractérisé en ce qu'**après avoir été soutiré de l'étage de régénération (405) et/ou après avoir été soutiré du récipient intermédiaire (420) l'agent de lavage régénéré est refroidi.

4. Procédé selon la revendication 3, **caractérisé en ce que** le refroidissement s'effectue par transfert indirect de chaleur à un agent de lavage chargé, froid.

5. Procédé selon l'une quelconque des revendications précédentes, **caractérisé en ce qu'**après avoir été soutiré du récipient intermédiaire (420) l'agent de lavage régénéré est comprimé jusqu'à une pression appropriée au fonctionnement du dispositif d'absorption.

6. Procédé selon l'une quelconque des revendications précédentes, **caractérisé en ce qu'**une quantité d'agent de lavage régénéré présente dans le récipient intermédiaire (420) s'ajuste par un niveau d'agent de lavage régénéré, dans l'étage de régénération (405), en tant que grandeur de régulation.

7. Procédé selon l'une quelconque des revendications précédentes, **caractérisé en ce que** l'envoi au récipient intermédidiare (420) s'effectue en continu ou périodiquement ou par charges successives.

8. Procédé selon l'une quelconque des revendications précédentes, **caractérisé en ce que** le gaz de synthèse brut comporte en option au moins un élément choisi dans le groupe constitué par le sulfure de carbonyle (COS), les mercaptans (RSH), l'acide cyanhydrique (HCN) et l'ammoniac (NH₃).
